# EUROPEAN PATENT SPECIFICATION

(11) **EP 0 356 461 B1**
(45) Date of publication and mention of the grant of the patent: **12.01.1994**
(21) Application number: 88904795.7
(22) Date of filing: 11.04.1988
(51) Int. Cl.: B22F 3/22, C04B 35/00

(54) **FORMING OF COMPLEX HIGH PERFORMANCE CERAMIC AND METALLIC SHAPES**
HERSTELLUNG VON KOMPLEXEN KERAMISCHEN UND METALLISCHEN HOCHLEISTUNGSFORMKÖRPERN
FORMAGE DE PIECES CERAMIQUES ET METALLIQUES COMPLEXES AUX PERFORMANCES ELEVEES

(30) Priority: 09.04.1987 US 36085; 25.11.1987 US 125643
(43) Date of publication of application: 07.03.1990
(73) Proprietor: CERAMICS PROCESS SYSTEMS CORPORATION, Milford, Massachusetts 01757 (US); Metals Process Systems, F-92100 Boulogne-Billancourt (FR)
(72) Inventor: OCCHIONERO, Marc, A., Arlington, MA 02174 (US); NOVICH, Bruce, E., Lexington, MA 02173 (US); SUNDBACK, Cathryn, A., Harvard, MA 01451 (US)
(74) Representative: Overbury, Richard Douglas
(86) International application number: US8801258
(87) International publication number: WO8807902

(56) References cited:
- DE-A- 3 011 911
- US-A- 4 341 725

## Description

### BACKGROUND OF THE INVENTION

The present invention relates to a process and a composition suitable for the forming of complex shapes from ceramic or metallic particulates. More particularly, the present invention relates, among other things, to a well-dispersed, cryoprotected composition which can be molded by freezing, lyophilized, and subsequently sintered to form a complex high performance shape.

Complexly shaped, 3-dimensional, high performance ceramic parts are essential structural and electronic components for a wide variety of industries. High performance properties are those which closely approach the intrinsic properties of the starting material, for example, strength, toughness, uniformity, surface finish, resistivity, optical properties, and thermal expansion. These and other properties are markedly affected by the quality of the starting material and the manner in which it is processed. Factors that have limited the production of advanced ceramics for high performance applications are (i) poor strength and reliability, stemming from poor raw material quality and improper processing techniques, and (ii) high cost, stemming from low product yields, long processing cycle times, and high capital equipment expenditure. For example, a high strength, high performance alumina article is one which can in some cases be characterized by a fully densified body uniformly composed of uniform submicron alumina grains. If a processing step introduces a texture or a defect of a critical size, a strength limiting flaw will have been created and will result in a severe departure from the intrinsic or high performance properties desired.

Historically, ceramics have not been used for high performance applications due to poor starting materials and the incorporation of property limiting defects through inadequate processing, both as mentioned above. Only recently has the ceramics community recognized the importance of both the starting materials and the processing technique on the properties of the article produced.

In general, 3-dimensional complexly shaped ceramic parts are manufactured by thermoplastic injection molding, in which ceramic or metal powders are compounded with a mixture of thermoplastic resins at high torque and at high temperature. The resulting mixture has a dough-like consistency, which is why the compounding process is generally referred to as "kneading". Particle dispersion is difficult and tedious to obtain in such a system, and traditionally has been a source of microstructural defects, such as holes and non-uniform particle packing. The mixture is then fed into a high pressure injection molding machine, usually in the form of granules or pellets. The molding machine and the molds used are typically large and expensive because injection pressures can range from approximately 2500 psi (1.72 x 10⁷ Pa) to 30,000 psi (2.07 x 10⁸ Pa),thus requiring mold clamping forces in the "tens of tons" range. As the pellets are fed into the injection molding machine, they are remelted and injected through a sprue into a mold cavity. The high viscosity and dough-like consistency of the molding composition can result in weld or knit lines, mold gate, sprue, and parting line textures, all of which can create property limiting defects. After the part is molded, the thermoplastic/ceramic composition is subjected to binder removal, which is typically a long (requiring days), expensive, and deleterious process, particularly for a fine particle matrix typical of a high performance ceramic body. Initially binder removal can result in bubble formation, delamination, and blistering of the part (as typically 40% by volume of the composite is a plastic material which is removed from the finely porous body). During binder removal, which is commonly practiced by heating the article, the polymer/ceramic composite is heated beyond the polymer softening point, and thus dimensional tolerance is difficult to control. After binder removal, the porous particulate body is sintered at high temperatures so that the particulate structure can fuse together, thereby resulting in a dense, strong ceramic that is approximately 20% smaller than the presintered (green) particulate part. Final machining is generally required due to poor dimensional tolerances, parting lines, and gate remnants remaining on the fired part. However, the machining process commonly imparts defects to the fired part, thereby creating property limiting, especially strength limiting, defects.

An alternate approach to thermoplastic resin molding has been to substitute low temperature melting, low viscosity waxes in place of the thermoplastic resins. While this substitution allows for low pressure injection molding, the problems associated with dispersion, binder removal, machining, green strength, and dimensional tolerances have kept this particular system from wide commercial acceptance.

Historically, investigators have recognized the limitations that the bidder has placed on the processing of complexly shaped, 3-dimensional parts. The art later began to understand and appreciate that the binder, which had allowed the ceramic and metal particles to be formed into a shape and later handled, was also the cause of many economic and performance problems. Rivers, U.S. Pat. No. 4,113,480, developed an aqueous-based injection molding process exclusively for metal powders using 1.5 to 3.5 wt.% (metal powder basis) of high viscosity methylcellulose additive to provide green strength. The resulting mixture of metal powder, water, and methylcellulose has a "plastic mass" consistency and can be injection molded at 8,000 psi (5.52 x 10⁷ Pa). The molded mass is then thermally dried and the green part undergoes a conventional sintering process. Although binder burnout is eliminated in this particular process, the presence of defects and costs associated with dispersion and molding of a high viscosity mix, as well as the implementation of a necessary but difficult thermal drying step, still remain.

The use of a molding vehicle which could be frozen has been investigated as an alternate method for casting or molding without the use of thermoplastic carriers. Sublimative drying by freeze drying (lyophilization) has been shown to be less destructive to the particle fabric in the green part during drying. A. Kwiatkowski et al., "Preparation of Corundum and Steatite Ceramics by the Freeze Drying Method," Ceramurgia International, vol. 6, no. 2, pp. 79-82 (1980). Such a method has been described by Nesbit, U.S. PAT. No. 3,765,512, which describes casting a ceramic shape from a thick slip containing water and ceramic particles which are then frozen into a shape while in the mold. The resulting frozen part was demolded, dried at room temperature and pressure, and subsequently fired. Downing et al., U.S. Pat. No. 3,885,005, has cast coarse grained refractory shapes from a slip containing 70% coarser than #200 mesh ceramic particles, water, and silica sol binder. The resulting cast shape was subsequently frozen, causing the silica to gel and cementing the refractory particles together. The residual water was frozen and the part was demolded and heated to 200°F (93.3°C) to thaw and dry the part. Dennery et al., U.S. Pat. No. 3,567,520, in making metal parts from powdered metals, formed a thin aqueous-based paste sheet into a part, the part was frozen at -60°F (-51.1°C) and then freeze-dried to overcome thermal drying stresses which would be destructive to the part. Maxwell et al., U.S. Pat. No. 2,893,102, cast and molded thicker parts from an aqueous ceramic slip in which the slip and mold were frozen in a CO₂ bath followed by freeze drying and sintering. As a slight departure from the art thus described, Weaver et al., U.S. Pat. No. 4,341,725, describes the use of a cryoprotectant as an additive in an aqueous suspension to inhibit ice crystal growth, which, after drying, can cause severe strength limiting defects. Weaver claims that the foregoing prior art would result in "low performance" articles riddled with scars resulting from ice crystal formation. By using hydrogen bonding additives in a hydrogen bonding medium, Weaver et al. claimed to limit the size of ice crystals formed to those on the order of 20-50 microns (micrometers).

### SUMMARY OF THE INVENTION

We have invented a process for producing complexly shaped, 3-dimensional ceramic and metallic parts having nearly ideal and tailored microstructures, which process uniformly and reproducably yields part properties closely approaching those of the intrinsic material. This process by which uniform ceramic and metallic microstructures can be produced preferably includes the steps of mixing to provide a nearly ideal dispersion, filtering, low pressure molding or casting, freezing without the formation of textures or property limiting defects, gentle but rapid sublimative drying, and rapid lower temperature sintering. Further, the present process eliminates the binder removal and reduces or eliminates the machining steps which are both traditional sources for defects resulting in non-uniformity of the final part. Still further, larger cross sections can be made using the present invention while also attaining a high surface detail replication and resolution, for example, high as-molded and as-fired surface finish. As useful in this process, the present invention also provide a composition including components which act both as dispersants for the ceramic or metallic particles and as cryoprotectants. The invention is described below in more detail with respect to various specific embodiments.

According to the present invention there is provided a process for producing a ceramic or metallic article, comprising:
(a) providing a stable, pourable suspension including at least 35 vol.% solid ceramic or metallic particles, a dispersant, at least one cryoprotectant and water as the suspension medium;
(b) shaping the suspension in a mold;
(c) freezing the mold;
(d) freeze drying the resultant molded shape before thawing to obtain a dried shape; and
(e) firing the dried shape.

The present invention provides ceramic or metallic articles having a uniform, homogeneous composition, a smooth surface finish, a dense or uniformly porous defect-free microstructure, a texture-free surface, and a high dimensional tolerance. This invention also obviates the need for a binder burnout step, thereby precluding deformations and the imparting of defects typically created by such a processing stage. In essence, this invention provides the ability to control defects on a particle size scale, on the order of less than about one micron (micrometer), in contrast to the 20-50 micron (micrometer) defects with which the art has typically been concerned.

### DETAILED DESCRIPTION OF SPECIFIC EMBODIMENTS

The present invention is an integrated process, from powder preparation to sintering, for the production of high performance, simply and complexly shaped ceramic and metallic parts. This process can be used for a wide variety of oxide and non-oxide monolithic and composite ceramic compositions, such as, but not limited to, alumina, silica, cordierite, zirconia, silicon nitride, sialon, zirconia toughened alumina, siC whisker reinforced alumina, and silicon nitride; this invention is also applicable to a wide variety of metal powders, such as carbonyl iron, carbonyl nickel, and stainless steel. In general, the present invention is applicable to fine and coarse inorganic powders. This invention is also applicable to a wide variety of particle sizes, including submicron (submicrometer) and micron (micrometer) sizes, to a wide variety of particle size distributions, including narrow and wide distributions, and to a wide variety of surface areas, preferably having a specific surface area less than about 100 m²/g.

The particulate compositions described above are formed into a casting or molding slip, preferably one which is highly loaded, that is, having a solids content of at least about 35% by volume, and a slip which is of a very low viscosity, preferably less than about 5,000 mPa·s at 100 sec⁻¹ shear rate. This low, pourable viscosity is achieved by improved particle dispersion in the suspension medium, and allows for proper injection without fill textures, knit or weld lines, or parting line defects. The solution chemistry includes at least one, most preferably a series, of cryoprotectants. Moreover, a cryoprotectant can have a dual role of being both a cryoprotectant and a dispersant, a green strength enhancer, and/or a viscosity modifier. Again, this is in contrast to Weaver's description of a singular cryoprotectant, where the emphasis in that patent is solely on retarding ice crystal growth without an appreciation for the aspects of ceramics processing. In the present invention, a hydrogen bonding dispersant, such as a polyacrylate, which acts as both a dispersing aid to greatly improve dispersion and also as a cryoprotectant, is added to the aqueous suspension. Secondarily, a hydrogen-bonding viscosity modifier to ensure proper rheology may also act as a cryoprotectant, for example, methylcellulose ether.

Additional components of the aqueous suspension include a hydrogen bonding green strength enhancer or a viscosity modifier, such as polyvinyl alcohol or methylcellulose. For example, the system can include a plasticizer which also has cryoprotectant properties, such as polyethylene glycol. Further, glycerol can be used as a cryoprotectant, and in some concentrations can also plasticize the dispersant (e.g., NARLEX LD-45) or a viscosity modifier (e.g., METHOCEL). Accordingly, an advantageous aspect of this invention is that various components are multifunctional, performing dispersant, cryoprotectant, green strength enhancement, and/or viscosity modification functions. The particular functions are highly dependent on the specific system, especially regarding the compatibility of the components used, as described below.

The particulate powders, water, and additives are carefully mixed together under high shear rate to produce a fluid, pourable slurry which is then filtered. Filtering is typically achieved by a series of filters having an average pore size of about 10 microns (micrometers). Although not essential, it is preferred to filter the slurry to remove foreign debris which may accumulate from the surrounding air, from various containers, or which may be present in the raw materials. Such foreign debris has been shown to produce microstructural contamination, inhomogeneity, and strength limiting defects.

The resulting suspension is deaired and injected into a mold. Injection is typically accomplished at low pressure, which is generally less than 100 psi (6.89 x 10⁵ Pa). The mold material may be soft or hard, such as silicone rubber, wax, alumina, or tooth steel. The molds can be cold prior to injection, such as typically -50°C to -80°C, or it can be warm, in which case the mold is quenched to within the desired temperature range subsequent to injection. In the latter instance, the rate at which the mold is cooled can be either fast or slow. It is preferable that the cooling rate be fast, which may additionally aid the inhibition ice crystal formation, and which also makes the entire process more rapid. A preferred embodiment includes performing the foregoing steps in a closed (i.e., hermetic, isolated) system to avoid contamination of the materials. It is also possible to perform the subsequent steps in a closed system.

Thereafter, the formed part is demolded and freeze dried. As used herein, the "freeze drying" process involves non-destructive sublimation of the pore fluid medium. Processing may be accomplished in discrete stages wherein the article is slowly heated during the non-destructive sublimation. Accordingly, some evaporation may occur during the sublimative drying process. Nevertheless, such an occurence is included within the present invention. An advantage of freeze drying is that there is very little shrinkage and the shrinkage is very controlled during drying. The resulting green part is easily handled and is then put into a sintering furnace. Accordingly, the present invention obviates the need for a binder burnout step. As noted above, it is preferred that the starting slurry be highly loaded, and this high solids content also acts to decrease the drying time by concommitently decreasing the amount of pore fluid medium to be removed. The suspension chemistry preferably should utilize components having high heats of sublimation.

Slurry or solution viscosity is primarily a function of the effective volume of solid particulates, rather than the weight fraction of solids. In practical terms, a pourable slurry of particles will have a volume fraction of solids considerably less than the maximum packing fraction. As the volume fraction of solids increases, particle-to-particle interactions, whether repulsive or agglomerative, act to increase the viscosity of the slurry. Especially for colloidal particles, the diffuse double layer acts to increase the effective volume fraction of solids. However, by the use of the dispersant particle-to-particle interactions can be decreased, and thus, to a large degree, the solid particles act as individual flow units and maintain a pourable viscosity. In practice, however, although the theoretical aspects of fine particle dispersion are documented in the literature, experts in the field empirically choose a series of conventional dispersants to test in the suspension system. We have discovered that preferred dispersants include polymeric polyelectrolytes. Preferred polymeric polyelectrolytes include acrylic acid based polymers or copolymers, especially those having sodium or ammonium groups (such as those available from National Starch Corp., Bridgewater, NJ, identified by the trade designations NARLEX LD-42 and LD-45, or those from R.T. Vanderbilt & Co., Norwalk, CT, under the designations Darvan C and Darvan 821A). Other dispensants include sodium, potassium, or ammonium polyphosphates or pyrophosphates, or other dispersants known in the art, such as water-soluble citrates, silicates, or tartrates. The dispersant may also be an amine, such as a di- or trialkylamine (e.g., diethylamine, tripropylamine), a di- or trialkanolamine (e.g., triethanolamine), N,N-diethylethanolamine, polyethylene imine (e.g., Corcat P-600 (MW=600,000) or Corcat P-12 (MW=12,000), available from Virginia Chemical, Portsmouth, VA), morpholine, or other amine dispersants known in the art. Still other dispersants include polyoxyalkylene derivatives of propylene glycol (e.g., Pluronic L-12, available from BASF-Wyandotte Corp., Parsippany, NJ), polyethylene glycols (e.g. EMCOL CC-42 and CC-55, available from Witco Chem. Corp., Houston, TX), polyvinylpyrrolidone, and vinylacetates. Solution viscosity also affects the suspension viscosity, and suspensions in accordance with the present invention may need a viscosity modifier to ensure proper casting and molding rheology. For example, dimethylsulfoxide (DMSO) as a cryoprotectant acts to increase suspension viscosity so that one may add methanol to lower viscosity while still providing a colloidally stable and compatible system.

Suitable cryoprotectants are monomeric and polymeric compounds, such as dimethylsulfoxide, methanol, ethanol, isopropanol, ethylene glycol, polyethylene glycol, glycerin, 1,2-propanediol, urea, sugar (e.g., sucrose, raffinose), aminoacetic acid, oxalic acid, glycerol, polyvinyl alcohol, methylcellulose, ethylcellulose, polyvinylpyrrolidone and the like.

The molding composition can also include a viscosity modifier or green strength enhancer; as described above, various components of the system may be multifunctional. Illustrative of these additives are polyvinyl alcohol, methyl- and ethylcellulose ethers (e.g., METHOCEL, available from Dow Chemical, Midland, MI), and glycols such as polyethylene glycol and methoxypolyethylene glycol (e.g. Carbowax, available from Union Carbide, New York, NY).

It is an important aspect of the present invention that the cryoprotectant and the dispersant be compatible with respect to dispersion stability, cryoprotection, green strength, and viscosity. For example, regarding dispersion stability, the use of acetone in some systems as opposed to dimethylsulfoxide may decrease dispersion stability and result in agglomerates, and thereby result in an increase in slurry viscosity and inhomogeneity. Further for example, the dispersant should not decrease the effect of the cryoprotectant, by which large crystals and resulting property defects would be created. Accordingly, the skilled artisan must test the dispersant/cryoprotectant system desired to determine whether the components are sufficiently compatible. The illustrations of this invention described below include systems that are compatible, as determined solely by experimentation, because no approach is known for determining compatible systems other than by empirical methods.

In one preferred embodiment of the present invention, the cryoprotectant contains a mixture of at least two compounds, one of which is especially methanol. While methanol alone may not provide suitable cryoprotection, in combination with another cryoprotectant (such as dimethylsulfoxide), it is believed that the methanol acts as an ice plasticizer, viscosity modifier and drying rate enhancer.

The avoidance of ice crystals of a size incompatible with high performance ceramics is achieved by the present invention utilizing one or more of the following techniques:
(a) the addition of one or more chemical additives;
(b) use of a suitably rapid cooling rate;
(c) use of a sufficiently high solids content.
We have found that rapidly cooled suspensions may not require the same concentrations of cryoprotectants as more slowly cooled suspensions in otherwise congruant circumstances. It will be appreciated that these techniques interact with one another, and the employment of one can affect the extent to which another may need to be employed in order to achieve desired results. Our examination of fired and green ceramics made in accordance with the present invention reveals that the techniques herein achieve ceramics that are substantially free of defects in a size range greater than approximately 10 microns (micrometers). Further, we have created formulations that have stable pot lives in excess of 60 days without stirring except just prior to use.

The present invention is illustrated by the following specific embodiments, which are not meant to be limiting in any manner.

### Example 1

This example describes the production of a funnel-shaped part about 4 in. long, having an inner diameter of about 1.75 in. (4.445 cm) tapering down to about 0.75 in (1.905 cm), an outer diameter tapering from about 2.0 in. (5.08 cm) to about 1.0 in. (2.54 cm), and a thickest cross-section of about 0.375 in. (0.952 cm).

Alumina powder (designated A-16 SG, available from Aluminum Co. of America, Pittsburgh, PA) was used as-received in an amount of about 50%-57% by volume in an aqueous medium, the actual amount depending on the firing shrinkage desired. Also included was about 1% by weight, based on the powder, of a dispersant such as an acrylate-based polymeric polyelectrolyte (designated NARLEX LD-45, available from National Starch Co., Bridgewater, NJ). This amount of dispersant is sufficient to impart adequate strength to the dried green part, although up to about 3 wt.% of the dispersant may be desirable at a lower solids loading fraction. Additional components included 10 vol.% dimethylsulfoxide as a cryoprotectant and 5 vol.% methanol, which aids in drying, and 0.25% NALCO 2309 (NALCO Chemicals, Chicago, Ill.) as an antifoaming agent, all amounts based on the pore fluid volume. The balance of the composition is water.

A highly loaded, pourable suspension was made by mixing the components overnight, such as on a roller mill or with a paint shaker. The final viscosity of the suspension was about 150-200 mPa·s (100 sec⁻¹) as measured on a Haake viscometer.

A mold was prepared from a steel cavity to define the outer surface of the part and a steel mandril placed concentrically therein to define the inner surface.

After hatching and milling, the pourable suspension was deaired and injected into the steel mold, which was just previously frozen to about -78°C. Before five minutes had elapsed, the suspension was frozen and the green part was demolded and easily handled. The green part was freeze dried for a period of about 20 hours at a pressure of no more than about 60 microns Hg (8.0 Pa). After freeze drying, the part was sintered at about 1500C for about 4 hours, which conditions are typical for alumina sintering. The sintered part had a uniform grain size and a density of 97+% theoretical.

### Example 2

This example describes the production of a set of household slip joint pliers, including the jaws, teeth, slip joint, and handle curvature. The parts are about 12 in. (30.48 cm) long, about 1.25 in. (3.175 cm) at the widest point, and about 0.5 in. (1.270 cm) at the thickest cross section.

The molding suspension included about 45 vol.% solids of a yttria (3 mol.%) partially stabilized zirconia (designated as HSY-3.0 grade available from Daiichi Kigenso Kagaku Kagyo Co., Ltd., Osaka, Japan), having an average particle size of about 1.0 micron (micrometer) and a specific surface area of about 7 m²/g. Three weight percent of a dispersant (NARLEX LD-45, based on dry ceramic powder weight) was used to disperse the powder, and was also present in an amount sufficient to give adequate green strength to the dried part. As in the previous example, 10 vol.% dimethylsulfoxide and 5 vol.% methanol, based on the pore fluid volume, were added as cryoprotectant and drying additive, respectively. The remainder was water. Mixing under high shear was performed as in the previous example.

The resulting pourable suspension was deaired and injected into an aluminum mold at room temperature. The filled mold was then placed in a -78°C environment for about 30 min. to completely freeze the part. Thereafter, the part was demolded and freeze dried as described above. The dried part was sintered at about 1600°C for about 4 hours. The resulting microstructure was a 99+% dense uniform grain size zirconia part.

### Example 3

This example describes the production of a more complex, three-dimensional shape; in particular, a four-vane rotor about 2 in. (5.08 cm) in diameter and about 2 in. (5.08 cm) high. The rotor geometry includes a hollow conical hub to which four helically shaped vane are attached, having a 90 angle between their leading and tailing edges; the vanes have a cross sectional thickness of about 0.25 in. (0.635 cm) tapering to about 0.125 in. (0.318 cm) at their outer edges.

The molding suspension was formed from about 55 vol.% of a low carbon 304 stainless steel powder having a particle size less than about 22 microns (designated as TP304L grade, available from Avesta Nyby powder AB, Torshalla, Sweden). Also added was about 3 wt.% of a dispersant (NARLEX LD-45, based on dry powder weight). Due to the high density (7.9 g/cm³) and the relatively large particle size of the powder, it was found necessary to increase the suspension viscosity to provide a stable suspension (i.e., no sedimentation). This was accomplished by adding 0.05 wt.% (dry powder basis) of a cellulose ether polymer (designated METHOCEL 20-121, available from Dow Chemicals, Midland, MI); this viscosity modifier also enhances the green strength of the dried part. As a cryoprotectant, 5 vol.% dimethylsulfoxide (pore fluid basis) was added; no methanol was used; 0.25 vol% NALCO 2309 was added as an antifoaming agent. The remainder was water.

The composition was batched and milled as described previously to achieve a pourable, stable suspension. The suspension was then deaired and injected into a mold previously frozen to about -78°C. Within about 1 min., the part was frozen and was thereafter demolded. The demolded part was subsequently freeze dried as described above. The dried part was fired using appropriate and conventional parameters applicable to metal powder furnaces and atmospheres therefor.

### Example 4

This example describes the formation of a ceramic billet in which a single component functions as both a dispersant and a cryoprotectant, and additionally functions as a green strength enhancer.

A molding suspension was prepared from about 45 vol.% yttira solids including about 3 mol% partially stabilized zirconia (HSY-3.0 grade, as in Example 2). The remaining 55 vol.% pore fluid was composed of water and a polymeric polyelectrolyte dispersant/cryoprotectant (NARLEX LD-45, as described above). The molding/casting composition thereby was composed of about 45 vol.% ceramic particles, about 10 vol.% dispersant/cryoprotectant, and about 45 vol.% water.

The suspension was molded and processed as described in Example 2. The ceramic billet had the fired dimensions of approximately 50 mm x 50 mm x 5 mm.

## Claims

1. A process for producing a ceramic or metallic article, comprising:
(a) providing a stable, pourable suspension including at least 35 vol.% solid ceramic or metallic particles, a dispersant, at least one cryoprotectant and water as the suspension medium;
(b) shaping the suspension in a mold;
(c) freezing the mold;
(d) freeze drying the resultant molded shape before thawing to obtain a dried shape; and
(e) firing the dried shape.

2. A process according to claim 1 wherein the dispersant is a polymeric electrolyte.

3. A process according to claim 2, wherein the polymeric polyelectrolyte is an acrylic acid based polymer or copolymer or a polyphosphate.

4. A process according to claim 1, wherein the dispersant is taken from one of the following; an amine, a polyethylene imine, a pyrophosphate, a citrate, a silicate, a tartrate, a polyoxyalkene derivative of propylene glycol, a polyethylene glycol, a polyvinylpyrrolidone and a vinyl acetate.

5. A process as claimed in any preceding claim, wherein the suspension has a viscosity of less than 5000 mPa.s at a shear rate of 100 sec⁻¹.

6. A process as claimed in any preceding claim, wherein steps (b) through (c) are accomplished in a closed system.

7. A process as claimed in any preceding claim, wherein the suspension further comprises a drying agent.

8. A process as claimed in any preceding claim, wherein the drying agent is methanol.

9. A process as claimed in any preceding claim, wherein the suspension further comprises a viscosity modifier.

10. A process as claimed in any preceding claim, wherein the suspension includes a combination of at least two cryoprotectants selected from the group consisting of dimethylsulfoxide, methanol, ethanol, isopropanol, ethylene glycol, polyethylene glycol, glycerin, 1,2-propanediol, urea, sugar, aminoacetic acid, oxalic acid, glycerol, polyvinyl alcohol, methylcellulose, ethylcellulose, polyvinylpyrrolidone, and mixtures thereof.

11. A process as claimed in any one of claims 1 to 9 wherein the dispersant also serves as the cryoprotectant.

12. A process as claimed in any preceding claim, wherein the step of shaping is effected by casting the suspension in the mold.

13. A process as claimed in any one of claims 1 to 11, wherein the step of shaping is effected by injecting the suspension into the mold.

14. A process as claimed in claim 13, wherein the suspension is injectable into the mold at a pressure of less than 100 psi (6.89x10⁵Pa).

15. A process as claimed in any preceding claim, wherein the particles are of a ceramic selected from alumina, zirconia, cordierite, silica, silicon nitride sialon, zirconia toughened alumina, SiC whisker reinforced alumina, or mixtures thereof.

16. A process as claimed in any one of claims 1 to 14, wherein the particles are of a metal selected from iron, nickel, alloys thereof, or mixtures thereof.

17. A process as claimed in any preceding claim, wherein step (b) precedes step (c).

18. A process as claimed in any one of claims 1 to 16, wherein step (c) precedes step (b).

## Patentansprüche

1. Verfahren zur Herstellung eines keramischen oder metallischen Gegenstandes enthaltend:
(a) Vorsehen einer stabilen vergießbaren Suspension, die wenigstens 35 Vol.-% feste keramische oder metallische Partikel, ein Dispergiermittel, wenigstens einen Kryoprotektor und Wasser als das Suspensionsmedium enthält;
(b) Gestalten der Suspension in einer Gießform;
(c) Gefrieren der Gießform;
(d) Gefriertrocknen der erhaltenen geformten Gestalt vor dem Auftauen, um eine getrocknete Gestalt zu erhalten; und
(e) Brennen der getrockneten Gestalt.

2. Verfahren nach Anspruch 1, bei welchem das Dispergiermittel ein polymerer Elektrolyt ist.

3. Verfahren nach Anspruch 2, bei welchem der polymere Polyelektrolyt ein Polymer oder Copolymer auf der Basis von Acrylsäure oder ein Polyphosphat ist.

4. Verfahren nach Anspruch 1 , bei welchem das Dispergiermittel wahlweise eines folgenden ist: ein Amin, ein Polyäthylenimin, ein Pyrophosphat, ein Zitrat, ein Silikat, ein Tartrat, ein Polyoxyalkenderivat von Propylenglycol, ein Polyäthylenglykol, ein Polyvinylpyrrolidon oder ein Vinylazetat.

5. Verfahren nach einem der vorhergehenden Ansprüche, bei welchem die Suspension eine Viskosität von weniger als 5000 mPa.S bei einer Scherrate von 100 sek⁻¹ aufweist.

6. Verfahren nach einem der vorhergehenden Ansprüche, bei welchem die Schritte (b) bis (c) in einem geschlossenem System ausgeführt werden.

7. Verfahren nach einem der vorhergehenden Ansprüche, bei welchem die Suspension außerdem ein Trocknungsmittel aufweist.

8. Verfahren nach einem der vorhergehenden Ansprüche, bei welchem das Trocknungsmittel Methanol ist.

9. Verfahren nach einem der vorhergehenden Ansprüche, bei welchem die Suspension außerdem einen Viskositätsveränderer aufweist.

10. Verfahren nach einem der vorhergehenden Ansprüche, bei welchem die Suspension eine Kombination von wenigstens zwei Kryoprotektoren aufweist, die aus folgender Gruppe ausgewählt sind: Dimethylsulfoxid, Methanol, Äthanol, Isopropanol, Äthylenglykol, Polyäthylenglykol, Glyzerin, 1,2-Propandiol, Harnstoff, Zucker, Aminoessigsäure, Oxalsäure, Glyzerol, Polyvinylalkohol, Methylzellulose Äthylzellulose, Polyvinylpyrrolidon, und deren Mischungen.

11. Verfahren nach einem der Ansprüche 1 bis 9, bei welchem das Dispergiermittel auch als der Kryoprotektor dient.

12. Verfahren nach einem der vorhergehenden Ansprüche, bei welchem der Schritt des Gestaltens durch Gießen der Suspension in die Gießform bewirkt wird.

13. Verfahren nach einem der Ansprüche 1 bis 11, bei welchem der Schritt des Gestaltens durch Einspritzen der Suspension in die Gießform bewirkt wird.

14. Verfahren nach Anspruch 13, bei welchem die Suspension in die Gießform bei einem Druck von weniger als 100 psi (6,89x10⁵Pa) einspritzbar ist.

15. Verfahren nach einem der vorhergehenden Ansprüche, bei welchem die Partikel aus einem keramischen Material bestehen, welches aus Tonerde, Zirkonerde, Kordierit, Kieselerde, Siliziumnitrid, Sialon, mit Zirkonerde, widestandsfähig gemachter Tonerde, SiC-Draht-verstärkte Tonerde oder deren Mischungen ausgewählt ist.

16. Verfahren nach einem der Ansprüche 1 bis 14, bei welchem die Partikel aus einem Metall bestehen, das aus Eisen, Nickel, deren Legierungen oder Mischungen davon ausgewählt ist.

17. Verfahren nach einem der vorhergehenden Ansprüche, bei welchem Schritt (b) Schritt (c) vorangeht.

18. Verfahren nach einem der Ansprüche 1 bis 16, wobei Schritt (c) Schitt (b) vorangeht.

## Revendications

1. Procédé pour la fabrication d'un article céramique ou métallique, consistant à :
(a) fournir une suspension stable pouvant être coulée comprenant un volume d'au moins 35% de particules céramiques ou métalliques solides, un dispersant, au moins un cryoprotecteur et de l'eau comme milieu de suspension ;
(b) mettre en forme la suspension dans un moule ;
(c) congeler le moule ;
(d) sécher par congélation la pièce moulée obtenue avant de la dècongeler pour obtenir une pièce sèche ; et
(e) cuire la pièce sèche.

2. Procédé selon la revendication 1, dans lequel le dispersant est un électrolyte polymère.

3. Procédé selon la revendication 2, dans lequel le polyélectrolyte polymère est un polymère dérivé de l'acide acrylique ou un copolymère ou un polyphosphate.

4. Procédé selon la revendication 1, dans lequel le dispersant est choisi dans le groupe suivant : amine, polyéthylène imine, pyrophosphate, citrate, silicate, tartrate, polyoxyalcène dérivé du propylène glycol, polyéthylène glycol, polyvinyle de pyrrolidone et acétate de vinyle.

5. Procédé tel que revendiqué dans l'une quelconque des revendications précédentes, dans lequel la suspension a une viscosité de moins de 5000 mPa.s à un taux de cisaillement de 100 sec⁻¹.

6. Procédé tel que revendiqué dans l'une quelconque des revendications précédentes, dans lequel les étapes (b) à (c) sont réalisées dans un système fermé.

7. Procédé tel que revendiqué dans l'une quelconque des revendications précédentes, dans lequel la suspension comprend aussi un agent séchant.

8. Procédé tel que revendiqué l'une quelconque des revendications précédentes, dans lequel l'agent séchant est du méthanol.

9. Procédé tel que revendiqué dans l'une quelconque des revendications précédentes, dans lequel la suspension comprend aussi un modificateur de viscosité.

10. Procédé tel que revendiqué dans l'une quelconque des revendications précédentes,dans lequel la suspension comprend une combinaison d'au moins 2 cryoprotecteurs choisis dans le groupe constitué par le dimethylsulfoxyde, méthanol, éthanol, isopropanol, éthylène glycol, polyéthylène glycol, glycérine, 1,2-propanediol, urée, sucre, acide amino-acétique, acide oxalique, glycérol, alcool de polyvinyle, méthylcellulose, éthylcellulose, polyvinyle de pyrrolidone et des mélanges de ceux-ci.

11. Procédé tel que revendiqué dans l'une quelconque des revendications 1 à 9 dans lequel le dispersant sert aussi de cryoprotecteur.

12. Procédé tel que revendiqué dans l'une quelconque des revendications précédentes, dans lequel l'étape de mise en forme est effectuée en coulant la suspension dans le moule.

13. Procédé tel que revendiqué dans l'une quelconque des revendications 1 à 11, dans lequel l'étape de mise en forme est effectuée en injectant la suspension dans le moule.

14. Procédé tel que revendiqué dans la revendication 13, dans lequel la suspension est injectable dans le moule à une pression inférieure à 100 psi (6,89x10⁵Pa).

15. Procédé tel que revendiqué dans l'une quelconque des revendications précédentes, dans lequel les particules sont constituées d'une céramique choisie parmi l'alumine, la zircone, la cordiérite, la silice, le nitrure de silicium, le sialon, l'alumine renforcée par la zircone, l'alumine renforcée avec des fibres de SiC, ou des mélanges de ceux-ci.

16. Procédé tel que revendiqué dans l'une quelconque des revendications 1 à 14, dans lequel les particules sont en un métal choisi parmi le fer, le nickel, des alliages de ceux-ci, ou des mélanges de ceux-ci.

17. Procédé tel que revendiqué dans l'une quelconque des revendications précédentes dans lequel l'étape (b) précéde l'étape (c).

18. Procédé tel que revendiqué dans l'une quelconque des revendications 1 à 16, dans lequel l'étape (c) précéde l'étape (b).
